# FASCICULE DE BREVET EUROPEEN

(11) **EP 1 568 585 B1**
(45) Date de publication et mention de la délivrance du brevet: **22.11.2006**
(21) Numéro de dépôt: 05290206.1
(22) Date de dépôt: 31.01.2005
(51) Int. Cl.: B62M 3/08

(54) **Platine de liaison rapide d'une chaussure de cycliste sur une pédale automatique de cycle**
Vorrichtung zur Schnell-Montierung und -Demontierung eines Fahrradschuhes auf einem automatischen Pedal
Device for quick mounting and release of a cycling footwear on an automatic pedal of a cycle

(30) Priorité: 27.02.2004 FR 0402002
(43) Date de publication de la demande: 31.08.2005
(73) Titulaire: Look Cycle International, 58000 Nevers (FR)
(72) Inventeur: Chretien, Jean-Louis, 18320 Cours les Barres (FR); Roudergues, Frédéric, 58000 Nevers (FR)
(74) Mandataire: Laget, Jean-Loup

(56) Documents cités:
- EP-A- 0 146 454
- EP-A- 1 169 929
- DE-A1- 2 449 514

## Description

La présente invention concerne une platine de liaison rapide d'une chaussure de cycliste sur une pédale automatique de cycle.

On connaît de telles platines de liaison rapide comportant un corps pourvu de trous de fixation de la platine à la semelle d'une chaussure. En général, ces trous de fixation sont formés par des fentes longitudinales permettant un certain réglage longitudinal de la position de la platine sur la semelle.

Ces platines de liaison rapide comportent un organe de liaison arrière qui est un organe femelle apte à coopérer avec un organe d'accrochage monté pivotant sur la pédale, et un organe de liaison avant qui généralement a la forme d'un organe mâle apte à coopérer avec un organe d'accrochage fixe prévu sur la pédale.

L'organe d'accrochage arrière sur la pédale est précontraint par un moyen élastique qui habituellement est constitué d'un ressort. Un tel dispositif à platine de liaison rapide est classique et se trouve décrit dans par exemple la publication EP 0 146454.

L'enclenchement de la platine sur la pédale se fait de manière automatique par l'introduction de l'organe de liaison avant dans l'organe d'accrochage avant sur la pédale et par un mouvement de pivotement de la platine vers le bas, ce qui fait pivoter l'organe d'accrochage arrière vers l'extérieur à l'encontre de l'effet du ressort afin de permettre l'introduction de l'extrémité libre de celui-ci dans l'organe de liaison arrière de la platine. Ensuite, l'organe d'accrochage arrière revient automatiquement à sa position initiale par l'effet de l'action du ressort.

Le déclenchement de la platine, c'est-à-dire la libération de celle-ci de la pédale, se fait par un mouvement de rotation de la platine autour d'un axe vertical à proximité de l'extrémité avant de la platine, ce qui provoque le pivotement de l'organe d'accrochage arrière qui ainsi lâche sa prise. L'interaction entre ces organes est décrite en détail dans le document cité ci-dessus.

Cette coopération d'une part entre l'organe de liaison arrière et l'organe d'accrochage pivotant, et d'autre part entre l'organe de liaison avant et l'organe d'accrochage fixe est mise en oeuvre sur des surfaces d'appui prévues sur les organes de liaison arrière et avant de la platine. Ces surfaces d'appui sont ainsi les seules exposées au frottement entre les organes en contact, surtout lors du déclenchement de la platine.

Les platines classiques sont soit en métal et suffisamment petites pour être pratiquement encastrées dans la semelle, soit en matière plastique et relativement grandes pour être fixées sur la semelle de manière à constituer une pièce en saillie sur celle-ci.

L'invention se rapporte en particulier à ces platines en matière plastique qui sont fabriquées par moulage par injection. Contrairement aux platines métalliques encastrées dans la semelle, les platines en matière plastique sont très exposées à l'usure lorsque le cycliste marche sur le sol. Il s'agit surtout de la partie avant qui a une tendance à s'user rapidement lors de la marche à pied.

Pour cette raison, la matière plastique utilisée pour constituer le corps de la platine doit être une matière plastique dure présentant des caractéristiques de résistance élevée à l'usure telle que par exemple une résine acétal. Cependant, une conséquence de cette dureté de la matière est qu'elle présente un coefficient de frottement relativement élevé.

Il serait pourtant souhaitable d'avoir des surfaces d'appui sur la platine qui présentent un coefficient de frottement réduit afin de faciliter le déclenchement de la platine à partir de son état enclenché sur la pédale. Plus précisément, un coefficient de frottement réduit faciliterait la rotation de la platine et en même temps la poussée exercée par la platine en rotation sur l'organe d'accrochage arrière précontraint pour le faire basculer afin de libérer ainsi la platine.

L'expérience a cependant montré qu'un coefficient de frottement réduit n'est pas compatible avec une matière plastique présentant des caractéristiques de résistance à l'usure élevées puisque si l'on réduit son coefficient de frottement, elle devient moins résistante. Par conséquent, on donne priorité à la résistance pour des raisons de sécurité.

Par ailleurs, les platines de liaison rapide connues ne donnent aucune indication de l'avancement de l'usure et il y a ainsi un risque d'accident à la suite d'une cassure de l'un ou l'autre des organes de liaison sur la platine.

L'invention a pour but de remédier à ces inconvénients en proposant une platine de liaison rapide avec une constitution différente et qui reste pourtant facile à fabriquer.

Un autre but de l'invention est d'améliorer la résistance à l'usure de la platine aux endroits les plus exposés à l'usure lors de la marche à pied du cycliste.

Un autre but de l'invention est de prévoir des témoins d'usure sur la platine pour prévenir le cycliste quand il est temps de changer de platines pour des raisons de sécurité.

L'objet de l'invention est une platine de liaison rapide d'une chaussure de cycliste sur une pédale de cycle, comportant un corps pourvu de trous de fixation de la platine à la semelle de la chaussure, et d'un premier organe de liaison arrière et d'un deuxième organe de liaison avant, lesdits premier et deuxième organes de liaison présentant des surfaces d'appui aptes à coopérer avec un organe d'accrochage arrière pivotant respectivement avec un organe d'accrochage avant fixe prévus sur la pédale, caractérisée par le fait que sensiblement toutes lesdites surfaces d'appui d'au moins ledit premier organe de liaison arrière sont formées sur un habillage rapporté en une matière présentant un coefficient de friction réduit par rapport à celui de la matière dudit corps, et que ledit habillage est obtenu par surmoulage sur ledit corps en étant ponctuellement fixé sur ledit organe de liaison.

Selon d'autres caractéristiques de l'invention :
- sensiblement toutes les surfaces d'appui dudit deuxième organe de liaison avant sont également formées sur un habillage rapporté par surmoulage d'une matière présentant un coefficient de friction réduit ;
- ledit habillage est fixé par des tenons d'ancrage venus de matière avec ledit habillage et s'étendant dans des trous effectués dans ledit corps ;
- lesdits trous sont des trous épaulés formant une cavité pour une tête d'ancrage sur lesdits tenons d'ancrage ;
- lesdits trous sont des trous traversants dans lesquels lesdits tenons d'ancrage s'étendent sur seulement une partie de la hauteur des trous pour s'arrêter à distance de la face inférieure de la platine de manière à former des témoins de l'usure de celle-ci ;
- les matières dudit corps respectivement dudit habillage sont en couleurs différentes permettant de bien distinguer lesdits témoins d'usure;
- l'habillage sur ledit premier organe de liaison comporte un élément horizontal s'étendant sur pratiquement toute la largeur de la platine, un élément central vertical bombé, et deux éléments latéraux verticaux inclinés disposés aux extrémités de l'élément horizontal ;
- ledit élément horizontal, ledit élément central, et lesdits deux éléments verticaux sont en une seule pièce obtenue par moulage par injection et fixée sur la surface du premier organe de liaison ;
- ledit élément central de l'habillage sur ledit premier organe de liaison s'étend dans une ouverture centrale prévue à l'extrémité arrière dudit corps et débouchant dans une cavité de celui-ci recevant de la matière de l'habillage de manière à bloquer celui-ci sur le corps.

D'autres caractéristiques et avantages de l'invention ressortiront de la description qui va suivre d'un mode de réalisation non limitatif de l'invention, en référence aux figures annexées dans lesquelles :
- la figure 1 est une vue en perspective illustrant un mode de réalisation de la platine de liaison selon l'invention ;
- la figure 2 est une vue de dessus de la platine de la figure 1 ;

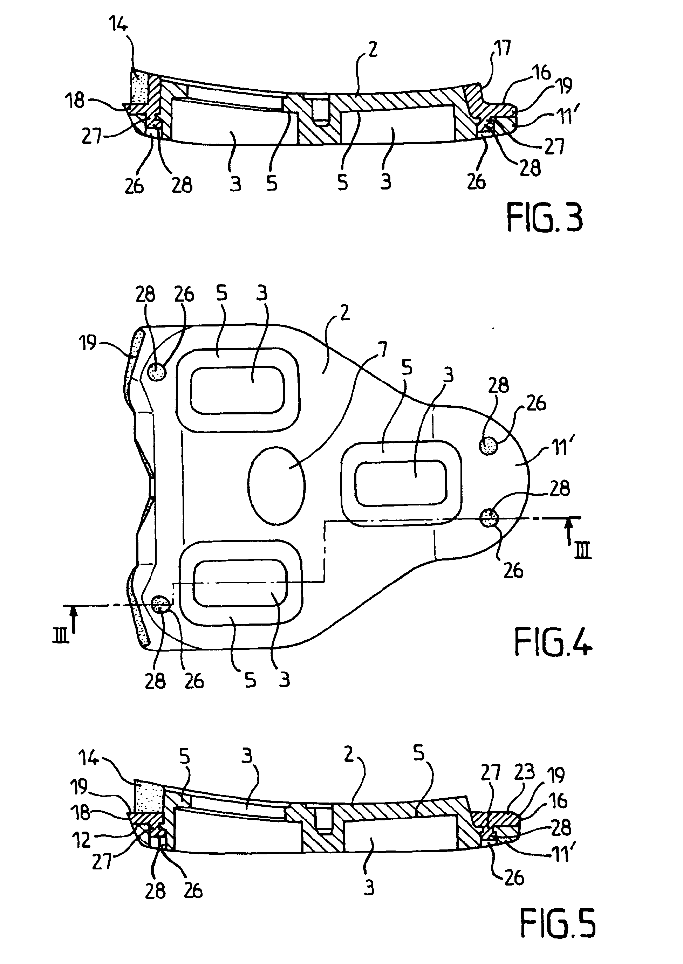

- la figure 3 est une vue en coupe selon la ligne III-III de la figure 4 ;
- la figure 4 est une vue de dessous de la platine de la figure 1 ; et
- la figure 5 est une vue en coupe d'une variante de la platine selon l'invention.

Dans les figures, les éléments identiques ou équivalents porteront les mêmes signes de référence.

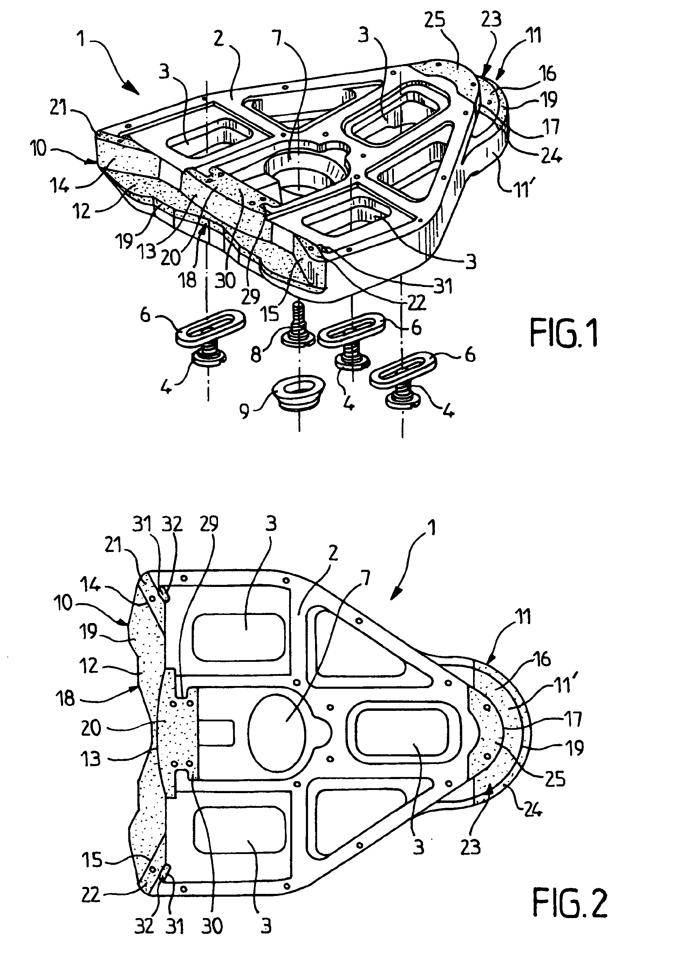

Les figures 1 et 2 montrent la face supérieure d'une platine de liaison rapide 1 à une pédale de cycle (non représentée). La platine comporte un corps 2 en une matière plastique présentant des caractéristiques de résistance élevée à l'usure telle qu'une résine acétal. De manière classique en soi, le corps 2 est composé d'une partie arrière globalement rectangulaire et une partie avant globalement triangulaire.

La platine 1 est pourvue de trois trous de fixation 3 dont un est disposé à l'avant de la platine et deux latéralement à l'arrière de celle-ci. Chaque trou de fixation 3 est apte à recevoir une vis de fixation 4 permettant de fixer la platine contre une semelle de chaussure de cycliste (non représentée).

Ces trous de fixation 3 ont avantageusement la forme de fentes longitudinales parallèles les unes par rapport aux autres afin de permettre un certain réglage longitudinal de la position de la platine 1 sur la semelle.

Chaque trou de fixation 3 est pourvu d'un épaulement intérieur 5 constituant une surface d'appui pour une entretoise métallique 6 contre laquelle la tête de la vis de fixation 4 vient se serrer.

Dans l'exemple illustré, la platine 1 comporte un quatrième trou de fixation ovale 7 sensiblement central recevant une vis de fixation 8 d'un dispositif de mémoire de position tel que décrit dans la demande de brevet FR 03 09364 de la demanderesse. Cette vis de fixation 8 est après son vissage dans ce dispositif cachée par un patin antidérapant 9.

La platine de liaison rapide 1 comporte en outre un premier organe de liaison arrière 10 et un deuxième organe de liaison avant 11.

Le premier organe de liaison arrière 10 présente la forme d'un évidement ouvert vers l'arrière et vers le haut. Cet évidement s'étend sur pratiquement toute la largeur de la platine et comporte des surfaces d'appui 12 à 15 aptes à coopérer avec un organe d'accrochage arrière pivotant (non représenté) sur la pédale. En général, cet organe d'accrochage a la forme d'une griffe qui est reçue dans la cavité définie par l'évidement et la surface inférieure de la semelle de la chaussure de cycliste lorsque la platine est fixée sur celle-ci.

Ces surfaces d'appui du premier organe de liaison 10 comprennent une surface d'appui horizontale 12, une surface d'appui centrale verticale bombée 13, et deux surfaces d'appui verticales latérales inclinées 14, 15 disposées aux extrémités opposées de la surface d'appui horizontale 12. L'organe d'accrochage arrière repose ainsi lors de l'utilisation contre la surface d'appui horizontale 12, et contre la surface d'appui centrale verticale bombée 13. Cependant, lors du déclenchement de la platine par une rotation latérale de celle-ci, l'organe d'accrochage arrière viendra appuyer contre l'une ou l'autre des surfaces d'appui latérales inclinées 14, 15, ce qui a pour effet que l'organe d'accrochage arrière sera repoussé en pivotant pour libérer la platine.

Le deuxième organe de liaison avant 11 présente la forme d'un bec 11' arrondi faisant saillie de la partie inférieure du sommet du triangle formé par la partie avant de la platine. Ce deuxième organe de liaison avant 11 est ainsi étagé par la conformation du bec 11' proprement dit et de la partie supérieure avant de la platine correspondant au sommet du triangle et qui est également arrondie. Le deuxième organe de liaison avant 11 comporte deux surfaces d'appui 16, 17 aptes à coopérer avec un organe d'accrochage avant fixe (non représenté) prévu sur la pédale.

Ces surfaces d'appui du deuxième organe de liaison 11 comprennent une surface d'appui horizontale 16 sur le bec 11' et une surface d'appui verticale arrondie 17 s'étendant autour du sommet du triangle et qui vient coopérer avec une forme en V prévue au centre de la face intérieure du deuxième organe d'accrochage. Le bec 11' est également arrondi et vient se loger dans un évidement à la face intérieure de l'organe d'accrochage avant qui présente le même rayon de courbure que celui du bec 11' de manière à définir un axe de rotation vertical de la platine pour le mouvement de déclenchement.

Selon une caractéristique importante de l'invention, les surfaces d'appui 12 à 15 d'au moins le premier organe de liaison arrière 10 sont formées sur un habillage rapporté 18 en une matière présentant un coefficient de friction réduit par rapport à celui de la matière du corps 2.

Cet habillage 18 comporte un élément horizontal 19 s'étendant sur pratiquement toute la largeur de la platine, un élément central vertical bombé 20, et deux éléments latéraux verticaux inclinés 21, 22 disposés aux extrémités de l'élément horizontal 19. De préférence, l'élément horizontal 19, l'élément central 20, et les deux éléments verticaux 21, 22 sont en une seule pièce obtenue par moulage par injection et fixée sur la surface du premier organe de liaison 10.

De préférence et comme cela est illustré sur les figures, les surfaces d'appui 16, 17 du deuxième organe de liaison avant 11 sont également formées sur un habillage rapporté 23 en une matière présentant un coefficient de friction réduit. Cet habillage 23 comporte un élément horizontal 24 s'étendant sur le bec 11' du deuxième organe de liaison 11 et un élément vertical 25 s'étendant sur la partie supérieure avant de la platine.

Cette matière qui présente un coefficient de friction réduit peut par exemple être constituée d'une résine à laquelle des additifs tels que du PTFE ont été ajoutés.

Chaque habillage à l'avant 23 est également de préférence en une seule pièce obtenue par moulage par injection et fixée sur la surface du deuxième organe de liaison 11.

Lors de la fabrication de la platine, on commence avantageusement par mouler par injection le corps 2 de la platine dans un premier moule, le démouler, et le placer dans un deuxième moule dans lequel les habillages 18, 23 sont rajoutés par surmoulage directement sur le corps 2. Les deux moulages par injection peuvent par ailleurs être effectués successivement dans une seule presse d'injection.

Pour la fixation des habillages 18, 23 sur le corps 2, ce dernier est pourvu de trous traversants 26 débouchant d'un côté sur la face inférieure du corps de la platine 1 et de l'autre côté sur la face supérieure de celui-ci dans les premier et deuxième organes de liaison 10, 11.

Selon une caractéristique de l'invention, les trous traversants 26 sont épaulés de manière à présenter une section réduite vers les premier et deuxième organes de liaison 10, 11. Lors du deuxième moulage par injection, de la matière pénètre dans ces trous traversants 26 de manière à former des tenons d'ancrage 27 se terminant par une tête d'ancrage 28 à l'intérieur de chaque trou traversant 26. Ces tenons d'ancrage 27 qui sont venus de matière avec les habillages 18, 23 ont pour effet de fixer ceux-ci ponctuellement sur l'organe de liaison respectif 10, 11.

Afin de bloquer l'habillage 18 dans le sens axial sur le premier organe de liaison 10, l'élément central vertical 20 s'étend dans une ouverture centrale 29 à l'extrémité arrière du corps 2 débouchant dans une cavité 30 de celui-ci recevant de la matière de l'habillage 23 lors du moulage de celui-ci.

Afin de bloquer l'habillage 18 aussi dans le sens transversal lors d'un mouvement de déclenchement par pivotement latéral de la platine, les éléments latéraux verticaux 21, 22 comportent sur leur face arrière une saillie 31 rentrant dans un évidement respectif 32 prévu à l'extrémité arrière du corps 2.

Selon une autre caractéristique de l'invention, les trous traversants 26 ne sont pas entièrement remplis lors du moulage des habillages 18, 23 de sorte que les tenons d'ancrage 27 s'étendent sur seulement une partie de la hauteur des trous pour s'arrêter à distance de la face inférieure de la platine de manière à former des témoins de l'usure de celle-ci.

Au fur et à mesure de l'abrasion de la surface inférieure de la platine 1 lors du déplacement à pied du cycliste, les extrémités des tenons 27 s'approcheront de cette surface inférieure pour finalement affleurer celle-ci, ce qui correspond à la limite maximum d'usage de la platine qui alors doit être remplacée par une platine neuve.

Afin de bien distinguer visuellement les témoins d'usure formés par les tenons 27, les matières du corps 2 respectivement de l'habillage 18, 19 sont en couleurs différentes.

Finalement, la figure 5 montre une vue en coupe d'une variante dans laquelle l'habillage à l'avant 19 ne couvre que la surface d'appui horizontale 16, alors que l'habillage à l'arrière 18 ne couvre que la surface d'appui horizontale 12 et les deux surfaces d'appui latérales verticales 14, 15. D'autres combinaisons sont évidemment envisageables sans pour autant sortir du cadre de l'invention.

Bien entendu, l'invention n'est pas limitée aux exemples illustrés et décrits, mais comprend également des habillages fabriqués séparément et ensuite fixés sur la platine, par exemple par collage.

## Revendications

1. Platine de liaison rapide d'une chaussure de cycliste sur une pédale de cycle, comportant un corps (2) pourvu de trous de fixation (3) de la platine (1) à la semelle de la chaussure, et d'un premier organe de liaison arrière (10) et d'un deuxième organe de liaison avant (11), lesdits premier et deuxième organes de liaison présentant des surfaces d'appui (12 à 17) aptes à coopérer avec un organe d'accrochage arrière pivotant respectivement avec un organe d'accrochage avant fixe prévus sur la pédale, **caractérisée par le fait que** sensiblement toutes lesdites surfaces d'appui (12 à 15) d'au moins ledit premier organe de liaison arrière (10) sont formées sur un habillage rapporté (18) en une matière présentant un coefficient de friction réduit par rapport à celui de la matière dudit corps (2), et que ledit habillage (18, 23) est obtenu par surmoulage sur ledit corps (2) en étant ponctuellement fixé sur ledit organe de liaison.

2. Platine de liaison rapide selon la revendication 1, **caractérisée par le fait que** ledit habillage (18, 23) est fixé par des tenons d'ancrage (27) venus de matière avec ledit habillage (18, 23) et s'étendant dans des trous (26) effectués dans ledit corps (2).

3. Platine de liaison rapide selon la revendication 2, **caractérisée par le fait que** lesdits trous (26) sont des trous épaulés formant une cavité pour une tête d'ancrage (28) sur lesdits tenons d'ancrage (27).

4. Platine de liaison rapide selon la revendication 2 ou 3, **caractérisée par le fait que** lesdits trous (26) sont des trous traversants dans lesquels lesdits tenons d'ancrage (27) s'étendent sur seulement une partie de la hauteur des trous pour s'arrêter à distance de la face inférieure de la platine de manière à former des témoins de l'usure de celle-ci.

5. Platine de liaison rapide selon la revendication 4, **caractérisée par le fait que** les matières dudit corps (2) respectivement dudit habillage (18, 23) sont en couleurs différentes permettant de bien distinguer lesdits témoins d'usure formés par lesdits tenons (27).

6. Platine de liaison rapide selon l'une quelconque des revendications précédentes, **caractérisée par le fait que** sensiblement toutes les surfaces d'appui (16, 17) dudit deuxième organe de liaison avant (11) sont également formées sur un habillage (23) rapporté par surmoulage d'une matière présentant un coefficient de friction réduit.

7. Platine de liaison rapide selon l'une quelconque des revendications précédentes, **caractérisée par le fait que** l'habillage (18) sur ledit premier organe de liaison (10) comporte un élément horizontal (19) s'étendant sur pratiquement toute la largeur de la platine (1), un élément central vertical bombé (20), et deux éléments latéraux verticaux inclinés (21, 22) disposés aux extrémités de l'élément horizontal (19).

8. Platine de liaison rapide selon la revendication 7, **caractérisée par le fait que** ledit élément horizontal (19), ledit élément central (20), et lesdits deux éléments verticaux (21, 22) sont en une seule pièce.

9. Platine de liaison rapide selon la revendication 7 ou 8, **caractérisée par le fait que** ledit élément central (20) de l'habillage (18) sur ledit premier organe de liaison (10) s'étend dans une ouverture centrale (29) prévue à l'extrémité arrière dudit corps (2) et débouchant dans une cavité (30) de celui-ci recevant de la matière de l'habillage (18) de manière à bloquer celui-ci sur le corps (2).

## Claims

1. Plate for the quick mounting of cycling footwear onto a bicycle pedal, comprising a body (2) provided with holes (3) for fixing the plate (1) to the sole of the shoe, and a first rear connecting member (10) and a second front connecting member (11), said first and second connecting members having bearing faces (12 to 17) which are designed to cooperate with a rear pivoting catching element and respectively with a front fixed catching element provided on the pedal, **characterised by** the fact that substantially all of the said bearing surfaces (12 to 15) of at least the first rear connecting member (10) are formed on an applied covering (18) made from a material with a reduced coefficient of friction compared to that of the material of the said body (2) and that the said covering (18, 23) is obtained by moulding onto said body (2) and being fixed at points onto said connecting member.

2. Quick mounting plate according to claim 1, **characterised by** the fact that the said covering (18, 23) is secured by anchoring catches (27) in one piece with the covering (18, 23) and extending into holes (26) made in said body (2).

3. Quick mounting plate according to claim 2, **characterised by** the fact that the said holes (26) have shoulders forming a cavity for an anchoring head (28) on the said anchoring catches (27).

4. Quick mounting plate according to claim 2 or 3, **characterised by** the fact that the said holes (26) are through holes in which the said anchoring catches (27) extend only over a section of the height of the holes so as to stop at a distance from the lower face of the plate so as to form indicators of the wear of the latter.

5. Quick mounting plate according to claim 4, **characterised by** the fact that the materials of the said body (2) respectively of said covering (18, 23) are different colours which makes it possible to distinguish easily the said indicators of wear formed by the said catches (27).

6. Quick mounting plate according any one of the preceding claims, **characterised by** the fact that almost all of the bearing faces (16, 17) of said second connecting member (11) are also formed on a covering (23) applied by moulding of a material with a reduced coefficient of friction.

7. Quick mounting plate according to any one of the preceding claims, **characterised by** the fact that the covering (18) of said first connecting member (10) consists of a horizontal element (19) extending over practically the whole width of the plate (1), a central vertical curved element (20), and two lateral vertical inclined elements (21, 22) arranged at the ends of the horizontal element (19).

8. Quick mounting plate according to claim 7, **characterised by** the fact that the said horizontal element (19), the said central element (20) and the said two vertical elements (21, 22) are made as a single piece.

9. Quick mounting plate according to claim 7 or 8, **characterised by** the fact that the said central element (20) of the covering (18) on said first connecting member (10) extends into a central opening (29) provided at the rear end of the said body (2) and opens into a cavity (30) of the latter receiving the material of the covering (18) so as to lock the latter onto the body (2).

## Patentansprüche

1. Schnellverbindungsplatte für eine Verbindung zwischen einem Schuh eines Fahrradfahrers auf einem Fahrradpedal, umfassend einen Körper (2), der mit Befestigungslöchern (3) von der Platte (1) zur Schuhsohle, mit einem ersten hinteren Verbindungselement (10) und mit einem zweiten vorderen Verbindungselement (11) versehen ist, wobei das erste und das zweite Verbindungselement Auflageflächen (12 - 17) aufweisen, die geeignet sind, mit einem hinteren Rastelement zusammenzuwirken, indem es sich bezüglich eines auf dem Pedal vorgesehenen feststehenden vorderen Rastelement verschwenkt, **gekennzeichnet dadurch, dass** im Wesentlichen alle Auflageflächen (12 - 15) zumindest des hinteren Verbindungselements (10) auf einem abstehenden Auflageelement (18) aus einem Material, das einen verringerten Reibungskoeffizienten im Vergleich zu dem des Materials des Körpers (2) aufweist, gebildet sind und dass das abstehende Auflageelement (18, 23) durch Aufgießen auf den Körper (2) erhalten ist, so dass dieses punktuell an dem Verbindungselement fixiert ist.

2. Schnellverbindungsplatte nach Anspruch 1, **dadurch gekennzeichnet, dass** das abstehende Auflageelement (18, 23) durch Ankerzapfen (27) fixiert ist, die aus dem Material des abstehenden Auflageelements (18, 23) gebildet sind und die sich in haltenden Löcher in dem Körper (2) erstrecken.

3. Schnellverbindungsplatte nach Anspruch 2, **dadurch gekennzeichnet, dass** die Löcher (26) mit Schultern versehene Löcher sind, die eine Ausnehmung für einen Ankerkopf (28) auf den Ankerzapfen (27) bilden.

4. Schnellverbindungsplatte nach Anspruch 2 oder 3, **dadurch gekennzeichnet, dass** die Löcher (26) durchgehende Löcher sind, in denen sich die Ankerzapfen (27) nur zu einem Teil der Höhe der Öffnungen erstrecken, um diese mit Abstand von der Innenseite der Platte so zu halten, so dass darauf Verschleißspuren gebildet werden.

5. Schnellverbindungsplatte nach Anspruch 4, **dadurch gekennzeichnet, dass** die Materialien des Körpers (2) und des abstehenden Auflageelements (18, 23) aus verschiedenen Farben ausgebildet sind, wodurch ermöglicht wird, die gebildeten Verschleißspuren an den Zapfen (27) gut zu unterscheiden.

6. Schnellverbindungsplatte nach einem der vorangehenden Ansprüche, **dadurch gekennzeichnet, dass** im Wesentlichen alle Auflageflächen (16, 17) des zweiten vorderen Verbindungselementes (11) gleichermaßen auf einem abstehenden Auflageelement (23) durch Aufgießen eines Materials ausgebildet sind, das einen verringerten Reibungskoeffizienten aufweist.

7. Schnellverbindungsplatte nach einem der vorangehenden Ansprüche, **dadurch gekennzeichnet, dass** das Auflageelement (18) auf dem ersten Verbindungselement (10) ein horizontales Element (19), das sich im Wesentlichen über die gesamte Länge der Platte (1) erstreckt, ein zentrales vertikal gewölbtes Element (20) und zwei laterale vertikal geneigte Elemente (21, 22) umfasst, die an den Enden des horizontalen Elementes (19) angeordnet sind.

8. Schnellverbindungsplatte nach Anspruch 7, **dadurch gekennzeichnet, dass** das horizontale Element (19), das zentrale Element (20) und die zwei vertikalen Elemente (21, 22) in einem Stück ausgebildet sind.

9. Schnellverbindungsplatte nach Anspruch 7 oder 8, **dadurch gekennzeichnet, dass** das zentrale Element (20) des Auflageelementes (18) auf dem ersten Verbindungselement (10) sich in eine mittige Öffnung (29), die an dem hinteren Ende des Körpers (2) vorgesehen ist, erstreckt und in eine Ausnehmung (30) zum Aufnehmen des Materials des Auflageelementes (18) mündet, so dass dieses auf dem Körper (2) gehalten wird.
